# EUROPÄISCHE PATENTSCHRIFT

(11) **EP 2 746 609 B1**
(45) Veröffentlichungstag und Bekanntmachung des Hinweises auf die Patenterteilung: **27.04.2016**
(21) Anmeldenummer: 12008430.6
(22) Anmeldetag: 19.12.2012
(51) Int. Cl.: F16C 35/04, F16C 19/02, F16B 33/00

(54) **Lageranrodnung mit einer Korrosionsschutzvorrichtung**
Bearing assembly equipped with an anti-corrosion device
Agencement de palier équipé d'un dispositif de protection contre la corrosion

(43) Veröffentlichungstag der Anmeldung: 25.06.2014
(73) Patentinhaber: IMO Holding GmbH, 91350 Gremsdorf (DE)
(72) Erfinder: Frank, Hubertus, 91315 Höchstadt/ Aisch (DE)
(74) Vertreter: Küchler, Stefan

(56) Entgegenhaltungen:
- EP-A1- 1 925 860
- DE-A1- 4 225 869
- DE-A1-102011 120 775
- DE-T1- 4 291 013
- DE-U- 7 004 815
- US-A1- 2006 000 169
- US-B1- 7 150 852
- US-B1- 7 975 519

## Beschreibung

Die Erfindung betrifft eine Vorrichtung und Verfahren zur Verbesserung des Korrosionsschutzes in Lageranordnungen und eine mit einer solchen Korrosionsschutzvorrichtung ausgestattete Lageranordnung, beispielsweise bestehend aus 25CrMo4, 42CrMo4, 43CrMo4, 34CrNiMo6, C45, C45N, X20Cr13, GG-20, GGG-40, GS15, St 37 oder ähnlichem Werkstoff. Die Korrosionsschutzvorrichtung dient zur Verbesserung des Korrosionsschutzes in und an Durchgangsbohrungen bzw. Sacklochbohrungen in oder an Lageranordnungen wie Wälzlagern und/ oder Drehverbindungen. Die Erfindung besonders charakterisierend sind jeweils die kennzeichnenden Merkmale der Ansprüche, beziehungsweise die genannten Vorteile.

### Stand der Technik und aktuelle Problemfelder:

Lageranordnungen wie Wälzlager, Großwälzlager und Drehverbindungen, aber auch Momentenlager, welche heutzutage in aggressiven Gas-/ Dampf-Umgebungen und/ oder in feuchtem Milieu eingesetzt werden, beispielsweise in 'offshore' aufgestellten Windenergieanlagen oder in Tunnelvortriebsmaschinen im Untertagebau oder auch in Wasserkraftwerken oder Unterwasserkraftwerken, unterliegen erfahrungsgemäß einer höheren Korrosions als solche Wälzlager, Großwälzlager, Drehverbindungen bzw. Momentenlager, die permanent einer trockenen Gasumgebung ausgesetzt sind.

Die EP 1 925 860 A1 zeigt ein Großwälzlager zum verdrehbaren Koppeln zweier Teile einer Windkraftanlage.

Korrodierende Maschinen- und Anlagenteile von solchen Lageranordnungen, beispielsweise korrodierende Bohrungen oder Anlaufflächen von Wälzlagern und Großwälzlagern, korrodierende Laufbahnsysteme von Drehverbindungen oder Momentenlagern, et cetera, welche aufgrund eines schwer zugänglichen Einbauortes nicht früh genug erkannt und somit nicht instand gesetzt oder repariert werden (können), können vor dem Erreichen der berechneten Lebensdauer ausfallen. Größere Folgeschäden an weiteren oder benachbarten Anlagenteilen sind nicht selten.

Nich selten verursacht Korrosion in Bohrungen oder Anlaufflächen so große Defekte, dass es ratsam oder notwendig wird, die gesamte Lageranordnung auszutauschen. Der korrosionsbedingte Ausfall von Maschinen- und Anlagenteilen an sich, insbesondere in Bezug auf Wälzlager, Großwälzlager, Drehverbindungen oder auch Momentenlager, ist in der Praxis stets nachteilig, da dies mit Reparatur- und/ oder Austauschaufwänden und folglich mit z.T. hohen Kosten verbunden ist. Grundsätzlich ist es heutzutage daher Stand der Technik, metallische Maschinenund Anlagenteile auf verschiedene Weisen vor Korrosion zu schützen.

In vielen Fällen geschieht dieser Korrosionsschutz durch Aufbringung von Zinkschichten. Letztlich sind sich Fachleute einig, dass die nachhaltigste Korrosionsschutzmaßnahme darin besteht, eine Beschichtung auf die vor Korrosion zu schützenden metallischen Maschinen- und Anlagenteile aufzubringen. So beschreibt die DIN ISO 14713 beispielsweise das Verfahren des Feuerverzinkens und das Verfahren des Sherardisierens, um möglichst guten Korrosionsschutz der Maschinen- und Anlagenteile gegenüber aggressiven Gas-/ Dampf-Umgebungen und/ oder dem feuchtem Milieu zu gewährleisten. Die DIN EN ISO 12944 behandelt ebenso Korrosionsschutz von Stahlbauten durch Beschichtungssysteme [1].
Jedoch ist es aus praktisch-technischen oder betriebswirtschaftlichen Gründen nicht immer ratsam oder sinnvoll, eine Verzinkung aus Korrosionsschutzgründen aufzubringen, beispielsweise im Sonderanlagen- und/ oder Rohrleitungsbau, oder bei Industriegütern mit kleinen Abmessungen. Im erstgenannten Falle, d.h. im Rohrleitungsbau, behilft sich der Fachmann zur Verminderung der Korrosionsneigung unter Anderem der Zuhilfenahme von kathodischem Korrosionsschutz. Kathodischer Korrosionsschutz (KKS) [2] bringt jedoch Installations- und Unterhaltskosten zusätzlich notwendiger Anlagen mit sich, d.h. es muss mindestens ein Schutzstromgerät installiert werden sowie eine Tiefenanode angebracht werden. Abgesehen davon ist der kathodische Korrosionsschutz in der Regel nur bei erd- oder Wasserverbundenen Metallkonstruktionen vorgesehen.

Im letztgenannten Falle (Industriegütern mit kleinen Abmessungen) behilft sich der Fachmann hingegen häufig unter Verwendung korrosionshemmender oder Korrosionsverhindernder Sprays oder Schmiermittel. Auch die Verwendung von sogenannten "volatile-corrosion-inhibitors (VCI)" - Folien ist eine Möglichkeit, vorherrschende Korrosionsneigung einzudämmen. Des Weiteren werden handtellergroße VCI-Spender oder VCI-Emitter, welche VCI Moleküle in der Gasphase emittieren, häufig in de Nähe von elektrotechnischen Anlagen eingesetzt, welche in aggressiven Gas-/ Dampf-Umgebungen und/ oder in feuchtem Milieu errichtet wurden. Eine Weiterentwicklung solcher als "VCI" bekannten Korrosionsinhibitoren, sogenannte "vapor-phase-corrosion-inhibitors (VPCI)" [3] sollen eine monomolekulare Schutzschicht auf den in der Nähe gelegenen Maschinen- und Anlagenteilen ausbilden, beispielsweise auf elektronischen Kleinbauteilen auf Leiterplatten.

Nachteilig bei der Anwendung solcher VCI oder VPCI Korrosionsinhibitoren als Schmiermittel oder als Spray ist, dass der Fachmann nie sicher sein kann, ob er genügend Schmiermittel oder Spray auf die vor der Korrosion zu schützenden Stelle appliziert hat, um langanhaltenden Korrosionsschutz zu bewirken. In der Fachwelt existieren Meinungen, dass derartige VCI/VPCI- Schmiermittel bzw. VCI/VPCI-Sprays lediglich temporären Korrosionsschutz bieten. Insbesondere bei der Anbringung von derartigen VCI/VPCI- Schmiermittel bzw. VCI/VPCI-Sprays lediglich in und an Durchgangsbohrungen bzw. Sacklochbohrungen in oder an Lageranordnungen stellt sich das Problem, dass das in die Bohrung eindringende Schmiermittel oder Spray gleichmäßig auf die gesamte Bohrlochoberfläche aufgebracht werden muss. Dies Gestaltet sich in der Praxis als schwierig, da ein VCI/VPCI-Spray nebelartig in der Bohrung niederschlägt und somit nur die der Wolke direkt entgegenstehenden Oberflächen von dem Mittel erfasst werden. Die im Nebelschatten stehenden Gewindeflanken beispielsweise bleiben unbenetzt.

Darüber hinaus verflüchtigt sich die aufgesprühte oder aufgeschmierte Substanz nach verhältnismäßig kurzer Zeit.

Selbstverständlich ist auch die Verwendung von metallischen Maschinen- und Anlagenteile aus Edelstahl oder Halbedelstahl eine valide Methode, um die negativen Auswirkungen der Korrosion zu verhindern oder zu vermeiden, jedoch ist daran stark nachteilig, dass Edelstahl oder Halbedelstahl in der Regel ein teurerer Werkstoff als beispielsweise 42CrMo4 oder C54N ist und somit z.T. erhebliche Mehrkosten verursacht.

### Aufgabe der Erfindung und Erfindungsbeschreibung:

Die vorliegende Erfindung hat die technische Aufgabe diejenigen Nachteile zu beheben, welche sich durch Korrosion dann ergeben, wenn Lageranordnungen in oder mit metallischen Maschinen- und Anlagenteilen in aggressiven Gas-/ Dampf-Umgebungen und/ oder in feuchtem Milieu eingesetzt werden. Es gilt die technische Aufgabe zu lösen eine Lageranordnung, beispielsweise bestehend aus einem herkömmlichen Lager- und/ oder Baustahl oder Ähnlichem, zu schaffen, welche in und an deren Durchgangsbohrungen bzw. Sacklochbohrungen eine im Vergleich zur restlichen Lageranordnung geringe Korrosionsneigung aufweist und länger anhaltenden, idealerweise wesentlich länger anhaltenden, Korrosionsschutz bietet als bisherige Sprays oder Schmierschichten.

Die Lösung dieses Problems gelingt bei einer gattungsgemäßen Lageranordung zur gegenseitigen Relativverstellung mindestens zweier Lagerringe vor Allem dann, wenn die vorliegende Korrosionsschutzvorrichtung und das nachfolgende Verfahren zur Einbringung eines verbesserten Korrosionsschutzes in die jeweilige Lageranordnung, insbesondere in Durchgangsbohrungen bzw. Sacklochbohrungen der jeweiligen Lageranordnung, verwendet wird.

Die Erfindung sieht demnach eine Korrosionsschutzvorrichtung für eine in Maschinen- und/ oder Anlagenteilen eingesetzte oder einsetzbare Lageranordnung vor, wobei diese Lageranordnung aus mindestens einem metallischen Werkstoff besteht und zur Relativverstellung mindestens zweier Lagerringe eingesetzt wird.

Der Werkstoff mindestens eines Rings der Lageranordnung ist dabei vorzugsweise aus 25CrMo4, 42CrMo4, 43CrMo4, 34CrNiMo6, C45, C45N, X20Cr13, GG-20, GGG-40, GS15, St 37 oder aus ähnlichen metallischen Stoffen gestaltet. Diese Lageranordnung umfasst oder beinhaltet dabei mehrere Wälzkörper und mehrere Durchgangsbohrungen und/ oder mehrere Sacklochbohrungen sowie eine erste Anschraubfläche zur Anbringung einer ersten Anschlusskonstruktion und eine zweite Anschraubfläche zur Anbringung einer gegenüberliegenden Anschlusskonstruktion. Das insbesondere charakteristische an der Erfindung ist, dass die erfindungsgemäße Korrosionsschutzvorrichtung in Durchgangsbohrungen und/ oder Sacklochbohrungen integriert ist oder an solchen Bohrungen eingebracht ist oder eingebracht werden kann.

In einer weiteren Ausgestaltung der Erfindung können anstatt der Wälzkörper auch Gleitelemente verwendet werden. Insbesondere bei Gleitlageranwendungen ist dieser Sachverhalt gegeben. Auch Gleitlageranwendungen bedürfen u.U. des erhöhten Korrosionsschutzes im Sinne der vorgenannten Erfindung.

In einer ersten erfindungsgemäßen Ausprägung weist die Lehre der erfindungsgemäßen Korrosionsschutzvorrichtung eine oder mehrerer Hülsen auf, die gegebenenfalls jeweils entlang ihrer Längsrichtung einen eingebrachten Spannspalt und/ oder eine oder mehrere derartig eingebrachte Aussparungen aufweist, etwa ähnlich einer herkömmlichen Spannhülse, wie sie aus der DIN 1481 bekannt ist. Diese mindestens eine Hülse ist jedoch nicht aus Federstahl bestehend.

Im erfindungsgemäßen Sinne bestehend derartige Hülsen vorzugsweise aus nichtmetallischem Werkstoff, beispielsweise aus Kunststoff oder Folie oder Pappe oder gar aus festem Papier oder aus Textilmaterial wie etwa Filz oder Stoff. Jener nichtmetallische Hülsen-Werkstoff kann mit einem Korrosionsschutzmittel, beispielsweise mit Korrosionsinhibitoren wie VCI oder VPCI, alternativ mit einem korrossionshemmenden oder korrosionsunterbindenden Mittel auf Fettbasis, etwa Polfett, benetzt oder getränkt oder befüllt sein.

Weiterhin vorzugsweise basiert das vorgenannte Korrosionsschutzmittel auf Basis eines Gemischs, deren Anteil hochraffinierte Kohlenwasserstoffen bieten. Es liegt ferner im Sinne der technischen Erfindungslehre, dass die mindestens eine Hülse mittenfrei ausgeführt ist. Dabei kann diese Hülse als Korrosionsinhibitoren-Trägermaterial dienen, insbesondere als VCI-Spender oder VPCI-Emitter, welcher VCI-Moleküle oder VPCI-Moleküle in der Gasphase emittiert.

Diese Moleküle in Gasphase schlagen sich auf unmittelbar benachbarten Teilen der Lageranordnung ab, wodurch eine Korrosionsschutzschicht entsteht.

Alternativ kann die mindestens eine Hülse mittenfrei ausgeführt sein und mit Polfett getränkt oder auch nur benetzt sein. Damit jenes Polfett nachhaltig in der Hülse verbleiben kann hat sich als besonders vorteilhaft herausgestellt, wenn eine spezielle Form einer solchen Hülse separate Hinterschneidungen oder Kammern aufweist, welche mit Polfett befüllt sind oder zumindest mit Polfett befüllt werden können.

Durch diese Maßnahme wird sichergestellt, dass die korrosionseindämmende Wirkung der Erfindung möglichst lange Zeit nachgehalten wird.

Der besondere Vorteil der vorgenannten Korrosionsschutzvorrichtung mit mindestens eine Hülse tritt dann zutage, wenn vorzugsweise mindestens eine der Schrauben (beispielsweise jeweils in Gestaltung einer Dehnschaftschraube) oder gar mindestens einer der Nieten mit jeweils mindestens einer solchen Hülse versehen wird.

Dann um umschließt jene Hülse die Schraube bzw. den Niet in Längsrichtung ringförmig, etwa ähnlich dem vorgenannten Prinzip der Spannhülse.

Besonders vorteilhaft ist, wenn diese Hülse die Schraube bzw. den Niet gegebenenfalls sogar unter mechanischer Spannung stehend umschließt, da durch diese Maßnahme ein axiales Verrutschen der Hülse auf der Schraube bzw. dem Niet weitestgehendst unterbunden werden kann.

Die Schraube oder der Niet wird, wie aus der Lagertechnik bekannt, jeweils in eine Durchgangsbohrung oder Sacklochbohrung der Lageranordnung eingeführt, wobei die jeweils zugehörige Hülse währenddessen die Schraube bzw. den Niet, gegebenenfalls unter mechanischer Spannung stehend, umschließt und somit ebenfalls ins Bohrloch, d.h. in die Durchgangsbohrung oder Sacklochbohrung, eingebracht ist.

Beispielsweise empfiehlt sich die vorliegende Vorrichtung zum Korrosionsschutz bei Verwendung von Dehnschaftschrauben oder Dehnschrauben nach DIN 2510. Dehnschrauben sind nämlich besonders zweckmäßig für Konstruktionen, die durch wechselnde Betriebskräfte und wechselnde Temperaturen beansprucht werden, wie Apparate, Rohrleitungen, Turbinen von Anlagen, schwingenden Anlagenteilen, o.Ä.

Es hat sich sogar herausgestellt, dass das Leistungsvermögen einer solchen Dehnschraube oder Dehnschaftschraube insbesondere bei Verwendung der folgenden Werkstoffe optimal ist: 12 Ni 19, X 10 CrNiTi 189, X 10 CrNiMoTi 1810, Ck 35, 24 CrMo 5, 21 CrMoV 57, 40 CrMoV 47, 12 Ni 19, X 10 CrNiTi 189, X 10 CrNiMoTi 1810, Ck 35, 24 CrMo 5, 21 CrMoV 57, 40 CrMoV 47, G 5.6, G 8.8, G 10.9 und/ oder G 12.9 .

Die vorgenannten Schrauben, Dehnschaftschrauben oder Niete(n) weren dabei in der Regel dazu eingesetzt, eine erste Anschraubfläche an einer ersten Anschlusskonstruktion zu fixieren, oder alternativ um eine zweite Anschraubfläche an einer zweiten Anschlusskonstruktion zu fixieren.

Als Lageranordnung im Sinne der vorliegenden Lehre kommen alle Bauformen und Arten von Momentenlagern, (Groß-)wälzlagern und Drehverbindungen in Frage, beispielsweise, aber nicht begrenzt auf, einreihige oder mehrreihige Großwälzlager, Rollendrehverbindungen, Kugellager, Vierpunktlager, Kombinationslager, Nadellager, Lager und Drehverbindungen mit kegel- oder tonnenförmigen Wälzkörpern, Kreuzrollenlager, Drahtrollenlager, et cetera.

In einer alternativen Ausprägungsform der Korrosionsschutzvorrichtung ist die damit ausgestattete Lageranordnung dergestalt weiterentwickelt, wodurch sich in höchst vorteilhafter Weise der Korrosionsschutzeffekt kumulativ zur vorgenannten Hülseneinbringung noch steigern lässt, dass im Bohrloch eine Zone veränderten Gefüges, insbesondere veränderten Oberflächengefüges in feinkristalliner Ausprägung, gegeben ist. Diese tiefe dieser Zone veränderten Werkstoffgefüges mag nur wenige Bruchteile eines Milimeters betragen - kann jedoch auch bis zu einigen Milimetern stark sein. Vorteilhaft im Sinne der Erfindung stellt sich diese veränderte Gefügezone des Lagerwerkstoffes dann dar, wenn sie über eine Tiefe bzw. Stärke zwischen 0.05 mm und 5.00 mm verfügt.

Inbesondere vorteilhaft im Sinne der Korrosionsschutzaufgabe der vorliegenden Erfindung hat sich ein diesbezüglicher Bereich zwischen 0.50 mm und 2.00 mm herausgestellt.

Als ideal im Sinne der Erfindung hat sich ferner erwiesen, wenn das vorgenannte Grundmaterial der Lageranordnung (bspws. 25CrMo4, 42CrMo4, 43CrMo4, 34CrNiMo6, C45, C45N, X20Cr13, GG-20, GGG-40, GS15, St 37 , o.Ä.) im Bohrloch über einen stetigen Gefügeübergang zur vorgenannten, vorzugsweise gegenüber jenem Grundmaterial feinkristallineren, Gefügezone des Lagerwerkstoffes verfügt. In der Praxis kann diese veränderte Gefügezone durch Walzen oder Rollen oder sonstiges Kaltverspannen in die kreisförmige Umfangsfläche je eines Bohrloches eingebracht werden.

Eine derartig veränderte Gefügezone im Bohrloch des Lagerwerkstoffes verfügt im Sinne der Erfindung über gegenüber dem Grundwerkstoff der Lageranordnung erhöhte Druckspannungsenergien. Das Verfahren zum Einbringen des Korrosionsschutzes im Sinne der veränderten Gefügezone ist erfindungsgemäß wie folgt beschrieben durchzuführen:
Diese vorgenannte veränderte Gefügezone wird beispielsweise mittels einem oder durch ein Druckstrahl-Verfahren appliziert. Dabei werden kleine und harte, beispielsweise kugelförmige, Körper unter sehr hohem Druck in das Bohrloch eingeschossen. Die kinetische Energie dieser kleinen und harten Körper wandelt sich beim Auftreffen in die Bohrlochoberfläche zu signifikant großen Teilen in plastische Verformungsenergie um, durch die das vor diesem Verfahrensschritt im Bohrloch vorhandene Gefüge verspannt wird, beispielsweise kaltverspannt wird. So wird vorzugsweise durch ein Kugel-Druckstrahl-Verfahren eine Oberflächenverdichtung bewirkt und dadurch der Korrosionsschutz erhöht.

Bei Anwendung eines solchen Druckstrahl-Verfahren können vorteilhafterweise auch zinkhaltige Strahlmittel eingesetzt werden. Das Zink in einem solchen Strahlmittel bringt die signifikante Verbesserung, dass die bestrahlte Oberfläche, also in der Regel die Oberfläche im Bohrloch (Sacklockbohrung oder Durchgangsbohrung) verzinkt wird, was zusätzlichem Korrosionsschutz förderlich ist.

Es entsteht zudem ein Platierungseffekt im vorgenannten Bohrloch, da der Werkstoff der Lageranordnung mit einer Zinkschicht überdeckt wird.

In einer weiteren alternativen Ausprägungsform der Korrosionsschutzvorrichtung ist die damit ausgestattete Lageranordnung dergestalt weiterentwickelt, dass in mindestens einem Bohrloch der Lagerringe ein korrossionshemmendes oder korrosionsunterbindendes Pulver eingebracht ist oder eingebracht wird, beispielsweise ein Pulver, welches VCI-Moleküle oder VPCI-Moleküle in der Gasphase emittiert.

Weitere Merkmale, Eigenschaften, Vorteile und Wirkungen auf der Grundlage der Erfindung ergeben sich aus der folgenden Beschreibung einiger bevorzugten Ausführungsformen der Erfindung, sowie anhand der Zeichnungen.

Hierbei zeigen:

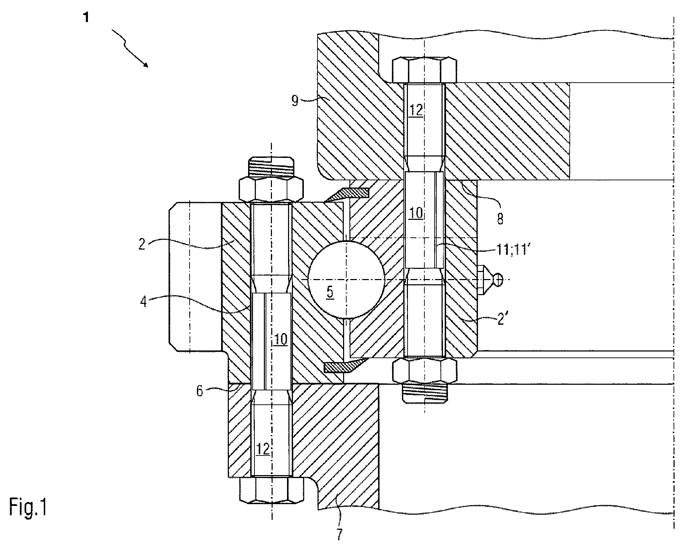

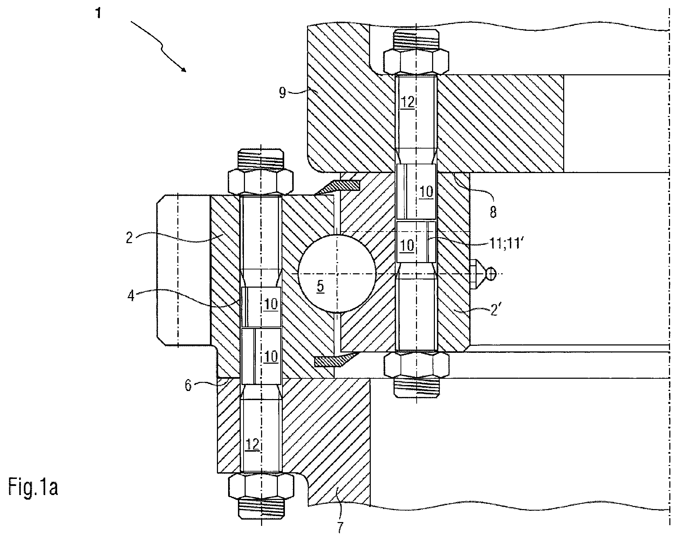

- Fig. 1: eine gattungsgemäße Lageranordnung in Ausprägung eines Wälzlagers mit kugelförmigen Wälzkörpern(5), wobei im Sinne des Korrosionsschutzes eine Hülse (10) pro Schraube (12) verwendet wird.
- Fig. 1 a: eine gattungsgemäße Lageranordnung wie in Fig. 1, wobei zwei Hülsen (10) pro Schraube (12) verwendet werden. Hierbei werden Dehnschaftschrauben (12) ohne Schraubenkopf (17) eingesetzt.
- Fig. 2: eine weitere gattungsgemäße Lageranordnung im Sinne von Fig. 1, wobei einer der Lagerringe verzahnt ist, während der gegenüberliegende Lagerring (2 ') kranzförmig mit einer Anschlußkonstruktion (7) verschraubt ist, wobei je eine Schraube (12) in jeweils eine Durchgangsbohrungen (4) eingeführt ist.
- Fig. 3: eine gattungsgemäße Lageranordnung ähnlich Fig. 2, wobei die Schrauben (12) in Sacklochbohrungen (4')enden.
- Fig. 4 a: eine gattungsgemäße Lageranordnung ähnlich Fig. 3 im Ausschnitt, wobei die Schraube (12) mit je einer Hülse (10) versehen ist und in einer Sacklochbohrung (4 ') endet. Zwecks weiter verbessertem Korrosionsschschutz im Bohrloch (4 ') wird korrosionshemmendes oder korrosionsunterbindendes Pulver (15) in das Bohrloch (4 ') zugegeben.

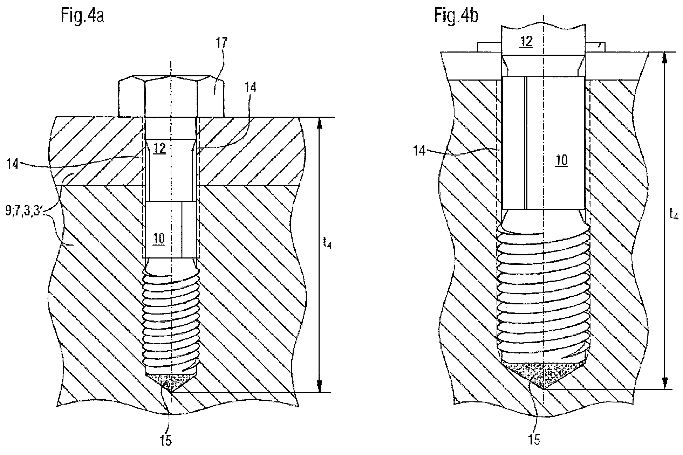

- Fig. 4 b: eine gattungsgemäße Lageranordnung ähnlich Fig. 4 a als Ausschnitt, die Zone des veränderten, beispielsweise feinkristallineren, Gefüges (14) angedeutet ist.

Wie aus Fig. 4 und Fig. 4 a exemplarisch ersichtlich ist, weist das Bohrloch (4 ; 4 ') dabei eine gewisse Bohrungstiefe (t₄) auf. Die Zone des veränderten Gefüges (14) kann bis auf den Grund des Bohrloches (4 ; 4') reichen (vgl. Fig. 4b) - oder, alternativ, nur entlang eines Teils der Bohrungstiefe (t₄) gegeben sein (vgl. Fig. 4a). Ebenso zeigen Fig. 4 und Fig. 4 a exemplarisch das korrisonsunterbindende bzw. korrosionshemmende Pulver (15), welches beispielsweise am Grund einer Sacklochbohrung (4 ') eingebracht wurde. Durch die Einbringung des Pulvers (15) an dieser Stelle kann aucgh jenes Pulver (15) als VCI-Spender oder VPCI-Emitter fungieren, welcher VCI-Moleküle oder VPCI-Moleküle in der Gasphase emittiert.

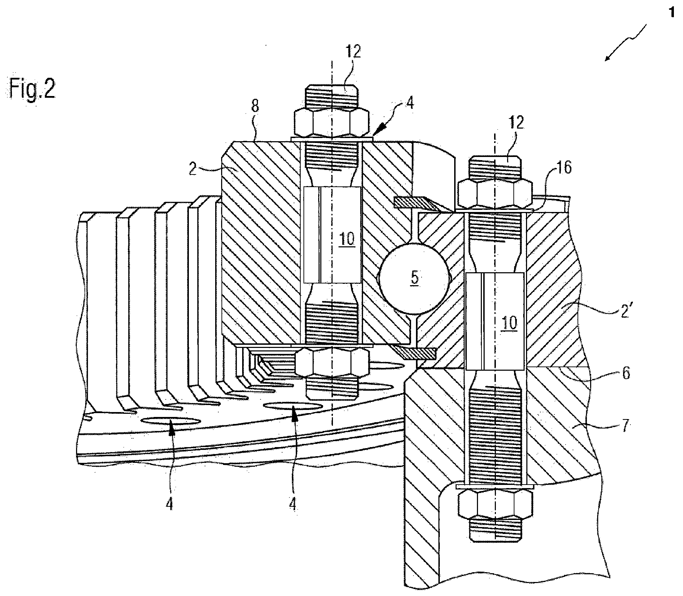

Fig. 1 und Fig. 2 weisen je beispielhaft die erfindungsgemäße Korrosionsschutzvorrichtung (1) für eine in Maschinen- und/ oder Anlagenteilen eingesetzte oder einsetzbare Lageranordnung (2 ; 2') auf, wobei die Lageranordnung (2 ; 2') aus mindestens einem metallischen Werkstoff besteht, und zur gegenseitigen Relativverstellung der zwei Lagerringe (2 ; 2') eingesetzt wird, wobei diese Lageranordnung mehrere kugelförmige Wälzkörper (5) und mehrere Durchgangsbohrungen (4) aufweist - sowie eine erste Anschraubfläche (6) zur Anbringung einer ersten Anschlusskonstruktion (7) aufweist und eine zweite Anschraubfläche (8) zur Anbringung einer gegenüberliegenden Anschlusskonstruktion (9) aufweist. Die Korrosionsschutzvorrichtung (1) ist in Form je einer Hülse (10) in jede Durchgangsbohrung (4) integriert und zwar so - dass jede Schraube (12) von der Hülse umfasst ist.

Jede Hülse (10) verbleibt somit in der Bohrung (4) an Ort und Stelle, insbesondere unverlierbar. Fig. 1 a zeigt eine ähnliche Ausprägungsform - jedoch mit mehreren Hülsen (10) pro Bohrung (4) bzw. Schraube (12). In der Praxis hat sich grundsätzlich die Verwendung von Scheiben (16) an den Bohrlöchern (4) als sinnvoll erwiesen.

In Verbindung mit vorliegender Erfindung (1) nehmen derartige Scheiben (16) zusätzlich sichernde Funktion wahr, sodass durch das Vorhandensein von einer Scheibe (16) pro Bohrloch (4) und Schraube (12) die in der Bohrung (4) eingebrachten oder vorhandenen Hülsen (10) nicht aus der Bohrung (4) fallen können. Der Bohrlochdurchmesser der Scheibe (16) ist dabei geringer als der mittenfreie Durchmesser der Hülse (10).

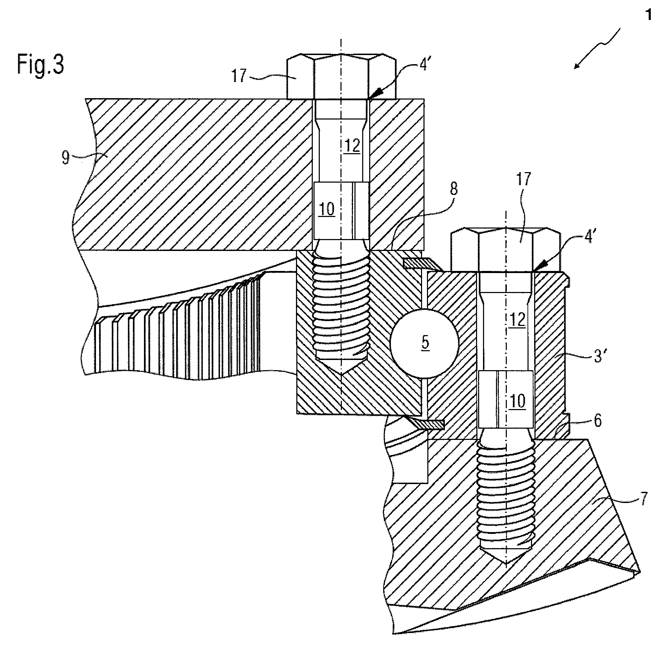

Fig. 3 weist je beispielhaft die erfindungsgemäße Korrosionsschutzvorrichtung (1) für eine in Maschinen- und/ oder Anlagenteilen eingesetzte oder einsetzbare Lageranordnung (3 ; 3 ') auf, wobei die Lageranordnung (3 ; 3 ') aus mindestens einem metallischen Werkstoff besteht, und zur gegenseitigen Relativverstellung der zwei Lagerringe (3 ; 3 ') eingesetzt wird, wobei mindestens einer dieser Lageringe eine Verzahnung aufweisen kann, wobei diese Lageranordnung mehrere kugelförmige Wälzkörper (5) und mehrere Sacklochbohrungen (4,) aufweist - sowie eine erste Anschraubfläche (6) zur Anbringung einer ersten Anschlusskonstruktion (7) aufweist und eine zweite Anschraubfläche (8) zur Anbringung einer gegenüberliegenden Anschlusskonstruktion (9) aufweist. Die Korrosionsschutzvorrichtung (1) ist in Form je einer Hülse (10) in jede Sacklochbohrung (4 ') integriert und zwar so - dass je eine Schraube (12) von der Hülse umfasst ist.

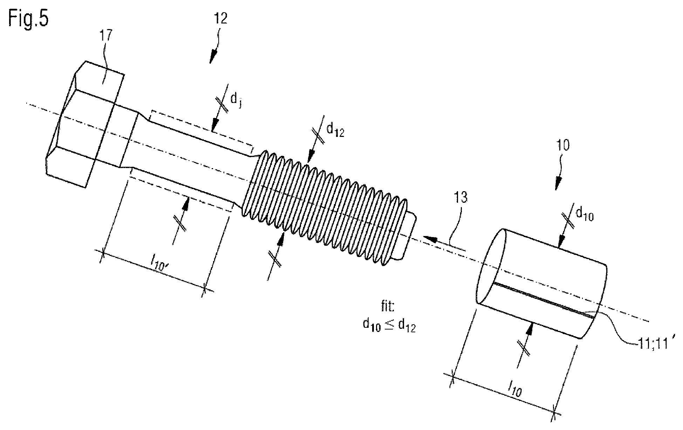

Letztlich beschreib Fig. 5 beispielhaft das Verfahren der Montage einer Hülse (10) auf einer Dehnschaftschraube (12). Der Durchmesser (d₁₀) der Hülse (10) wird-etwa ähnlich einer Spannhülse nach DIN - über den Durchmesser (d₁₂) einer Dehnschaftschraube (12) geschoben, gegebenenfalls unter mechanischer Spannung. Mechanische Spannung entsteht dann,
wenn gilt: d₁₀ kleiner oder gleich (d₁₂). Vorteilhafterweise ist die in Längsrichtung (13) axiale Länge (l₁₀) der Hülse (10) nahezu oder exakt identisch mit der Länge (l₁₀') des verjüngten Bereiches (dⱼ) der genannten Dehnschaftschraube (12). Ein etwaig vorhandener Schraubenkopf (17) verhindert das zusätzliche Verrutschen der Hülse (10) aus dem Bohrloch (4 ; 4') während des Betriebes der Lageranordnung in einer Maschine oder Anlage.

Gut erkennbar ist im Fig. 5 der Bereich des Spannspaltes (11) bzw. der Aussparung (11 ') in der Hülse, welche eine mechanische Aufweitung des Durchmessers (d₁₀) der Hülse (10) erst zulässt. Insbesondere lässt der Spannspalt (11) bzw. die Aussparung (11 ') in der Hülse eine mechanische Aufweitung des Durchmessers (d₁₀) auf mindestens den Betrag des Durchmessers (d₁₂) der Schraube (12) zu.

**Bezugszeichenliste:**

| | | | |
|---|---|---|---|
| 1 | Korrosionsschutzvorrichtung | | |
| 2 | Lageranordnung | 2' | Lageranordnung |
| 3 | Lageranordnung | 3' | Lageranordnung |
| 4 | Durchgangsbohrung | 4' | Sacklochbohrung |
| 5 | Wälzkörper | | |
| 6 | Anschraubfläche | | |
| 7 | Anschlusskonstruktion | | |
| 8 | Anschraubfläche | | |
| 9 | Anschlusskonstruktion | | |
| 10 | Hülse | | |
| 11 | Spannspalt | 11' | Aussparung |
| 12 | Schraube / Dehnschaftschraube | 12' | Niet |
| 13 | Längsrichtung | | |
| 14 | Gefügezone mit verändertem Gefüge | | |
| 15 | korrossionshemmendes oder korrosionsunterbindendes Pulver | | |
| 16 | Scheibe | | |
| 17 | Schraubenkopf | | |
| t₄ | Bohrungstiefe | | |
| l₁₀ | Hülsenlänge | | |
| l_{10'} | Länge des verjüngten Bereiches | | |
| d₁₀ | Hülsendurchmesser | | |
| d₁₂ | Durchmesser der Schraube oder des | Niets | |
| dⱼ | Durchmesser, verjüngt | | |

## Patentansprüche

1. Lageranordnung (2;2';3;3') aus mindestens einem metallischen Werkstoff, beispielsweise aus 25CrMo4, 42CrMo4, 43CrMo4, 34CrNiMo6, C45, C45N, X20Cr13 GG-20, GGG-40, GS15 oder St37, zum Einsatz in oder an Maschinen- und/oder Anlagenteilen, mit wenigstens zwei Lagerringen (2;2';3;3'), welche dank mehrerer Wälzkörper (5) oder Gleitlagerelemente gegeneinander verdrehbar sind, und die eine erste Anschraubfläche (6) zur Anbringung einer ersten Anschlusskonstruktion (7) aufweist, sowie eine zweite Anschraubfläche (8) zur Anbringung einer gegenüberliegenden Anschlusskonstruktion (9), sowie mehrere Durchgangsbohrungen (4) und/oder mehrere Sacklochbohrungen (4') für Schrauben (12) oder Niete (12'), welche in die Durchgangsbohrungen (4) und/oder Sacklochbohrungen (4') eingeführt werden, um die erste Anschraubfläche (6) an einer ersten Anschlusskonstruktion (7) zu fixieren, und/oder um die zweite Anschraubfläche (8) an der gegenüberliegenden Anschlusskonstruktion (9) zu fixieren, **gekennzeichnet durch** eine Korrosionsschutzvorrichtung (1) in Form einer oder mehrerer Hülsen (10) aus einem nichtmetallischen Werkstoff, die in mindestens eine der Durchgangsbohrungen (4) und/oder Sacklochbohrungen (4') wenigstens eines Lagerrings (2;2';3;3') eingebracht ist, wobei die Schraube (12) oder der Niet (12') in der betreffenden Bohrung (4;4') von der dortigen Hülse (10) umfasst ist, und wobei die Hülse (10) einen entlang ihrer Längsrichtung eingebrachten Spannspalt (11) oder mehrere, entlang ihrer Längsrichtung eingebrachte Aussparungen (11') aufweist.

2. Lageranordnung (2;2';3;3') nach Anspruch 1, **dadurch gekennzeichnet, dass** mindestens eine Hülse (10) aus Kunststoff oder Folie oder Pappe oder Papier oder Stoff besteht.

3. Lageranordnung (2;2';3;3') nach Anspruch 1 oder 2, **dadurch gekennzeichnet, dass** mindestens eine Hülse (10) mit einem korrossionshemmenden oder korrosionsunterbindenden Mittel auf Fettbasis benetzt ist oder getränkt ist oder gar befüllt ist.

4. Lageranordnung (2;2';3;3') nach einem der Ansprüche 1 bis 3, **dadurch gekennzeichnet, dass** mindestens eine Hülse (10) mit einem Korrosionsschutzmittel benetzt ist oder getränkt ist oder gar befüllt ist, vorzugsweise mit einem Korrosionsschutzmittel auf Basis eines Gemischs aus hochraffinierten Kohlenwasserstoffen und Korrosionsinhibitoren.

5. Lageranordnung (2;2';3;3') nach mindestens einem der vorgenannten Ansprüche, **dadurch gekennzeichnet, dass** die mindestens eine Hülse (10) als Korrosionsinhibitoren-Trägermaterial dient, insbesondere als VCI- Spender oder VPCI-Emitter, welcher VCI-Moleküle oder VPCI-Moleküle in der Gasphase emittiert.

6. Lageranordnung (2;2';3;3') nach mindestens einem der vorgenannten Ansprüche, **dadurch gekennzeichnet, dass** die mindestens eine Hülse (10) mit Polfett getränkt ist oder mit Polfett benetzt ist oder separate Hinterschneidungen oder Kammern aufweist, welche mit Polfett befüllt sind oder zumindest mit Polfett befüllt werden können.

7. Lageranordnung (2;2';3;3') nach mindestens einem der vorgenannten Ansprüche, **dadurch gekennzeichnet, dass** mindestens eine Hülse (10) unter Spannung in eine Durchgangsbohrung (4) und/oder Sacklochbohrung (4') eingebracht ist und/oder eine in eine Durchgangsbohrung (4) und/oder Sacklochbohrung (4') eingeführte Schraube oder Dehnschaftschraube (12) oder einen Niet (12') unter Spannung umschließt.

8. Lageranordnung (2;2';3;3') nach einem der vorhergehenden Ansprüche, **dadurch gekennzeichnet, dass** die Korrosionsschutzvorrichtung (1) in Form einer veränderten Gefügezone (14) mit feinkristallinerem Gefüge als das Grundmaterial der Lageranordnung (2;2';3;3') ausgeführt ist und somit mit stetigem Übergang in den Gründwerkstoff der Lageranordnung (2;2';3;3') integriert ist.

9. Lageranordnung (2;2';3;3') nach Anspruch 8, **dadurch gekennzeichnet, dass** die gegenüber dem Grundwerkstoff der Lageranordnung (2;2';3;3') veränderte Gefügezone (14) durch Walzen oder Rollen oder sonstiges Kaltverspannen der Oberfläche des Bohrloches (4;4') in den Grundwerkstoff der Lageranordnung (2;2';3;3') integriert ist.

10. Lageranordnung (2;2';3;3') nach mindestens einem der Ansprüche 8 oder 9, **dadurch gekennzeichnet, dass** die veränderte Gefügezone (14) gegenüber dem Grundwerkstoff der Lageranordnung (2;2';3;3') erhöhte Druckspannungsenergien innehat.

11. Verfahren zur Verbesserung des Korrosionsschutzes in einer Lageranordnung (2;2';3;3'), **dadurch gekennzeichnet, dass** mindestens ein Bohrloch (4;4') mindestens einer der Lagerringe (2;2') (3;3') vor dem Einsatz der Lageranordnung (2;2';3;3') in Maschinen- und/oder Anlagenteilen mit mindestens einer Hülse (10) aus nichtmetallischem Werkstoff versehen wird, wobei eine Schraube (12) oder ein Niet (12') in der betreffenden Bohrung (4;4') von der dortigen Hülse (10) umfasst ist, und wobei die Hülse (10) einen entlang ihrer Längsrichtung eingebrachten Spannspalt (11) oder mehrere, entlang ihrer Längsrichtung eingebrachte Aussparungen (11') aufweist.

12. Verfahren zur Verbesserung des Korrosionsschutzes in einer Lageranordnung (2;2';3;3') nach Anspruch 11, **dadurch gekennzeichnet, dass** mindestens einer der Lagerringe (2;2') (3;3') vor dem Einsatz der Lageranordnung (2;2';3;3') in Maschinen- und/oder Anlagenteilen ein Walzen oder Rollen sonstiges Kaltverspannen der Oberfläche mindestens eines Bohrloches (4;4') erfährt, sodass eine gegenüber dem Grundwerkstoff der Lageranordnung (2;2';3;3') veränderte Gefügezone (14) in selbige Lageranordnung (2;2';3;3') integriert wird.

13. Verfahren zur Verbesserung des Korrosionsschutzes in einer Lageranordnung (2;2';3;3') nach Anspruch 11 oder 12, **dadurch gekennzeichnet, dass** wenigstens eine Hülse (10) mit einem Korrosionsschutzmittel benetzt oder getränkt ist oder gar befüllt ist, wobei diese Hülse (10) als Korrosionsinhibitoren-Trägermaterial dienen kann, insbesondere als VCI-Spender oder VPCI-Emitter, welcher VCI-Moleküle oder VPCI-Moleküle in der Gasphase emittiert.

14. Verfahren zur Verbesserung des Korrosionsschutzes in einer Lageranordnung (2;2';3;3') nach einem der Ansprüche 11 bis 13, **dadurch gekennzeichnet, dass** mindestens einer der Lagerringe (2;2') (3;3') vor dem Einsatz der Lageranordnung (2;2';3;3') in Maschinen- und/oder Anlagenteilen an oder in dessen mindestens einem Bohrloch (4;4') mit Polfett getränkt ist oder mit Polfett benetzt ist, alternativ dass mindestens eine Hülse (10) in einem der Lagerringe (2;2') (3;3') mit Polfett getränkt ist oder mit Polfett benetzt ist.

15. Verfahren zur Verbesserung des Korrosionsschutzes in einer Lageranordnung (2;2';3;3') nach einem der Ansprüche 11 bis 14, **dadurch gekennzeichnet, dass** in mindestens einem Bohrloch (4;4') der Lagerringe (2;2') (3;3') korrosionshemmendes oder korrosionsunterbindendes Pulver (15) eingebracht ist, beispielsweise ein Pulver, welches VCI-Moleküle oder VPCI-Moleküle in der Gasphase emittiert.

## Claims

1. Bearing arrangement (2;2';3;3') consisting of at least one metallic material, for example of 25CrMo4, 42CrMo4, 43CrMo4, 34CrNiMo6, C45, C45N, X20Cr13, GG-20, GGG-40, GS15, St37, for use in or at machine and/or plant parts, with at least two bearing rings (2;2';3;3'), which, due to several rolling elements (5) or friction bearing elements, are able to rotate relative to each other, wherein the bearing arrangement (2;2';3;3') comprises a first screw-mounting surface (6) for affixing a first mating structure (7), as well as a second screw-mounting surface (8) for affixing an opposite mating structure (9), as well as several through-bores (4) and/or several blind bores (4') for screws (12) or rivets (12'), which are inserted into the through-bores (4) and/or blind bores (4'), for fixing the first screw-mounting surface (6) to a first mating structure (7), and/or for fixing the second screw-mounting surface (8) to an opposite mating structure (9), **characterized by** a corrosion protection device (1) in the form of one or more sleeves (10) made of a non-metallic material, which is inserted into at least one of the through-bores (4) and/or blind bores (4') of at least one bearing ring (2;2';3;3'), wherein the screw (12) or the rivet (12') in the regarding bore (4; 4') is encompassed by the sleeve (10) there, and wherein the sleeve (10) comprises a clamping gap (11) introduced along the longitudinal direction thereof, or several recesses (11') introduced along the longitudinal direction thereof.

2. Bearing arrangement (2;2';3;3') according to claim 1, **characterized in that** at least one sleeve (10) consists of plastic or film or cardboard or paper or fabric.

3. Bearing arrangement (2;2';3;3') according to claim 1 or 2, **characterized in that** at least one sleeve (10) is moistened or impregnated or even filled with a grease-based corrosion-inhibiting or corrosion-preventing agent.

4. Bearing arrangement (2;2';3;3') according to one of claims 1 to 3, **characterized in that** at least one sleeve (10) is moistened or impregnated or even filled with a corrosion protection agent, preferably with a corrosion protection agent based on a mixture of highly refined carbohydrates and corrosion inhibitors.

5. Bearing arrangement (2;2';3;3') according to any one of the aforementioned claims, **characterized in that** at least one sleeve (10) serves as a carrier material for corrosion inhibitors, particularly as a VCI dispenser or VPCI emitter that emits VCI molecules or VPCI molecules in the gas phase.

6. Bearing arrangement (2;2';3;3') according to any one of the aforementioned claims, **characterized in that** the at least one sleeve (10) is impregnated with terminal grease or moistened with terminal grease or has separate undercuts or chambers that are filled with terminal grease or at least can be filled with terminal grease.

7. Bearing arrangement (2;2';3;3') according to any one of the aforementioned claims, **characterized in that** at least one sleeve (10) is inserted under tension in a through-bore (4) and/or blind bore (4'), and/or embraces a screw or stretch shaft screw (12) or a rivet (12') under tension.

8. Bearing arrangement (2;2';3;3') according to any one of the aforementioned claims, **characterized in that** said corrosion protection device (1) is implemented in the form of an altered microstructure region (14) having a more finely crystalline microstructure than the base material of the bearing arrangement (2;2';3;3'), and thus is integrated, with a continuous transition, into the base material of the bearing arrangement (2;2';3;3').

9. Bearing arrangement (2;2';3;3') according to claim 8, **characterized in that** the microstructure region (14) that is altered in comparison to the base material of the bearing arrangement (2;2';3;3') is integrated into the base material of the bearing arrangement (2;2';3;3') by grinding or rolling or other cold-working of the surface of the borehole (4; 4').

10. Bearing arrangement (2;2';3;3') according to at least one of claims 8 or 9, **characterized in that** the altered microstructure region (14) has higher compressive stress energies than the base material of the bearing arrangement (2;2';3;3').

11. Method for improving corrosion protection in a bearing arrangement (2;2';3;3'), **characterized in that** before the bearing arrangement (2;2';3;3') is installed in machine and/or plant parts, at least one borehole (4;4') of at least one of the bearing rings (2;2') (3;3') is provided with at least one sleeve (10) made from non-metallic material, wherein a screw (12) or a rivet (12') in the regarding bore (4;4') is encompassed by the sleeve (10) there, and wherein the sleeve (10) comprises a clamping gap (11) introduced along the longitudinal direction thereof, or several recesses (11') introduced along the longitudinal direction thereof.

12. Method for improving corrosion protection in a bearing arrangement (2;2';3;3') according to claim 11, **characterized in that** before the bearing arrangement (2;2';3;3') is installed in machine and/or plant parts, at least one of the bearing rings, (2;2') (3;3') undergoes grinding or rolling or other cold-working of the surface of at least one borehole (4; 4'), such that a microstructure region (14) that is altered in comparison to the base material of the bearing arrangement (2; 2'; 3; 3') is integrated into said bearing arrangement (2; 2'; 3; 3').

13. Method for improving corrosion protection in a bearing arrangement (2;2';3;3') according to claim 11 or 12, **characterized in that** before the bearing arrangement (2;2';3;3') is installed in machine and/or plant parts, at least one borehole (4;4') of at least one of the bearing rings (2;2') (3;3') is provided with at least one sleeve (10) made from non-metallic material and moistened or impregnated or even filled with a corrosion protection agent, said sleeve (10) serving as a carrier material for corrosion inhibitors, particularly as a VCI dispenser or VPCI emitter that emits VCI molecules or VPCI molecules in the gas phase.

14. Method for improving corrosion protection in a bearing arrangement (2;2';3;3') according to any one of claims 11 to 13, **characterized in that** before the bearing arrangement (2; 2'; 3; 3') is installed in machine and/or plant parts, at least one of the bearing rings (2; 2') (3; 3') is impregnated with terminal grease or moistened with terminal grease at or in its at least one borehole (4; 4'), alternatively **in that** at least one sleeve (10) in one of the bearing rings (2; 2') (3; 3') is impregnated with terminal grease or moistened with terminal grease.

15. Method for improving corrosion protection in a bearing arrangement (2;2';3;3') according to any one of claims 11 to 14, **characterized in that** corrosion-inhibiting or corrosion-preventing powder (15) is placed in at least one borehole (4;4') of the bearing rings (2;2') (3;3'), for example a powder that emits VCI molecules or VPCI molecules in the gas phase.

## Revendications

1. Structure de palier (2 ; 2' ; 3 ; 3') composée d'au moins une matière métallique, par exemple de 25CrMo4, 42CrMo4, 43CrMo4, 34CrNiMo6, C45, C45N, X20Cr13, GG-20, GGG-40, GS15 ou St37, pour le montage dans ou sur des pièces de machine et/ou d'installation, comportant au moins deux bagues de roulement (2 ; 2' ; 3 ; 3') qui peuvent tourner en opposition grâce à plusieurs corps de roulement (5) ou éléments de palier lisse, et qui présente une première surface de boulonnage (6) pour le montage d'une première construction de raccordement (7), ainsi qu'une seconde surface de boulonnage (8) pour le montage d'une construction de raccordement opposée (9), ainsi que plusieurs perçages traversants (4) et/ou plusieurs perçages borgnes (4') pour des vis (12) ou des rivets (12') qui sont introduits dans les perçages traversants (4) et/ou les perçages borgnes (4') afin de fixer la première surface de boulonnage (6) sur une première construction de raccordement (7), et/ou afin de fixer la seconde surface de boulonnage (8) sur la construction de raccordement opposée (9), **caractérisée par** un dispositif de protection contre la corrosion (1) sous forme d'un ou de plusieurs manchons (10) en matière non métallique, qui est introduit dans au moins un des perçages traversants (4) et/ou des perçages borgnes (4') d'au moins une bague de roulement (2 ; 2', 3 ; 3'), en ce que la vis (12) ou le rivet (12') est entouré dans le perçage en question (4 ; 4') par le manchon (10) qui s'y trouve, et en ce que le manchon (10) présente une fente de serrage (11) introduite suivant son sens longitudinal ou plusieurs évidements (11') introduits suivant leur sens longitudinal.

2. Structure de palier (2 ; 2' ; 3 ; 3') selon la revendication 1, **caractérisée en ce qu'**au moins un manchon (10) est composé de matière plastique ou d'une feuille ou de carton ou de papier ou de tissu.

3. Structure de palier (2 ; 2' ; 3 ; 3') selon la revendication 1 ou 2, **caractérisée en ce qu'**au moins un manchon (10) est mouillé ou imprégné ou voire rempli d'un agent anticorrosif ou d'un agent inhibiteur de corrosion à base de graisse.

4. Structure de palier (2 ; 2' ; 3 ; 3') selon l'une des revendications 1 à 3, **caractérisée en ce qu'**au moins un manchon (10) est mouillé ou imprégné ou voire rempli d'un agent anticorrosif, de préférence d'un agent anticorrosif à base d'un mélange d'hydrocarbures hautement raffinés et d'inhibiteurs de corrosion.

5. Structure de palier (2 ; 2' ; 3 ; 3') selon au moins l'une des revendications précitées, **caractérisée en ce qu'**au moins un manchon (10) sert de support d'inhibiteur de corrosion, en particulier de distributeur VCI ou d'émetteur VPCI qui émet des molécules VCI ou des molécules VPCI en phase vapeur.

6. Structure de palier (2 ; 2' ; 3 ; 3') selon au moins l'une des revendications précitées, **caractérisée en ce qu'**au moins un manchon (10) est imprégné de graisse pour borne ou mouillé de graisse pour borne ou présente des contre-dépouilles séparées ou des chambres qui sont remplies de graisse pour borne ou qui peuvent tout au moins être remplies de graisse pour borne.

7. Structure de palier (2 ; 2' ; 3 ; 3') selon au moins l'une des revendications précitées, **caractérisée en ce qu'**au moins un manchon (10) est introduit sous tension dans un perçage traversant (4) et/ou dans un perçage borgne (4') et/ou entoure sous tension une vis insérée ou une vis à tige allégée (12) ou un rivet (12') dans un perçage traversant (4) et/ou un perçage borgne (4').

8. Structure de palier (2 ; 2' ; 3 ; 3') selon l'une des revendications précédentes, **caractérisée en ce que** le dispositif de protection contre la corrosion (1) est réalisé sous forme d'une zone de structure modifiée (14) avec une structure plus microcristalline que la matière de base de la structure de palier (2 ; 2' ; 3 ; 3') et est ainsi intégré avec une transition continue dans la matière de base de la structure de palier (2 ; 2' ; 3 ; 3').

9. Structure de palier (2 ; 2' ; 3 ; 3') selon la revendication 8, **caractérisée en ce que** la zone de structure modifiée (14) par rapport à la matière de base de la structure de palier (2 ; 2' ; 3 ; 3') est intégrée par laminage ou roulement ou autre déformation à froid de la surface du perçage (4 ; 4") dans la matière de base de la structure de palier (2 ; 2' ; 3 ; 3').

10. Structure de palier (2 ; 2' ; 3 ; 3') selon au moins l'une des revendications 8 ou 9, **caractérisée en ce que** la zone de structure modifiée (14) par rapport à la matière de base de la structure de palier (2 ; 2' ; 3 ; 3') détient des énergies de contrainte de compression augmentées.

11. Procédé pour l'amélioration de la protection contre la corrosion dans une structure de palier (2 ; 2' ; 3 ; 3'), **caractérisé en ce qu'**au moins un perçage (4 ; 4') d'au moins une des bagues de roulement (2 ; 2') (3 ; 3') est muni avant le montage de la structure de palier (2 ; 2' ; 3 ; 3') dans des pièces de machine et/ou d'installation d'au moins un manchon (10) en matière non métallique, **en ce qu'**une vis (12) ou un rivet (12') est entourée dans le perçage en question (4 ; 4') par le manchon (10) qui s'y trouve, et **en ce que** le manchon (10) présente une fente de serrage (11) introduite suivant son sens longitudinal ou plusieurs évidements (11') introduits suivant leur sens longitudinal.

12. Procédé pour l'amélioration de la protection contre la corrosion dans une structure de palier (2 ; 2' ; 3 ; 3') selon la revendication 11, **caractérisé en ce qu'**au moins une des bagues de roulement (2 ; 2') (3 ; 3') avant le montage de la structure de palier (2 ; 2' ; 3 ; 3') dans des pièces de machine et/ou d'installation subit un laminage ou roulement ou autre déformation à froid de la surface d'au moins un perçage (4 ; 4'), de sorte qu'une zone de structure modifiée (14) soit intégrée par rapport à la matière de base de la structure de palier (2 ; 2' ; 3 ; 3') dans la même structure de palier (2 ; 2' ; 3 ; 3').

13. Procédé pour l'amélioration de la protection contre la corrosion dans une structure de palier (2 ; 2' ; 3 ; 3') selon la revendication 11 ou 12, **caractérisé en ce qu'**au moins un manchon (10) est mouillé ou imprégné ou voire rempli d'un agent anticorrosif, **en ce que** ce manchon (10) peut servir de support inhibiteur de corrosion, en particulier de distributeur VCl ou d'émetteur VPCI qui émet des molécules VCI ou des molécules VPCI en phase vapeur.

14. Procédé pour l'amélioration de la protection contre la corrosion dans une structure de palier (2 ; 2' ; 3 ; 3') selon l'une des revendications 11 à 13, **caractérisé en ce qu'**au moins une des bagues de roulement (2 ; 2') (3 ; 3') avant le montage de la structure de palier (2 ; 2' ; 3 ; 3') dans des pièces de machine et/ou d'installation au niveau de ou dans au moins un de ses perçages (4 ; 4') est imprégnée de graisse pour borne ou mouillée de graisse pour borne, ou bien qu'au moins un manchon (10) est imprégné de graisse pour borne ou mouillé de graisse pour borne dans une des bagues de roulement (2 ; 2') (3 ; 3').

15. Procédé pour l'amélioration de la protection contre la corrosion dans une structure de palier (2 ; 2' ; 3 ; 3') selon l'une des revendications 11 à 14, **caractérisé en ce que** dans au moins un perçage (4 ; 4') des bagues de roulement (2 ; 2') (3 ; 3') est introduite une poudre (15) anticorrosion ou inhibitrice de corrosion, par exemple une poudre qui émet des molécules VCI ou des molécules VPCI en phase vapeur.
